# EUROPEAN PATENT APPLICATION

(11) **EP 4 803 590 A1**
(43) Date of publication of application: **09.09.2026**
(21) Application number: 24885520.7
(22) Date of filing: 21.10.2024
(51) Int. Cl.: C09J 201/00, C09J 5/00, C09J 7/35, C09J 11/04, C09J 123/00

(54) **ADHESIVE FOR HIGH-FREQUENCY DIELECTRIC HEATING**

(30) Priority: 31.10.2023 JP 2023186447
(71) Applicant: LINTEC CORPORATION, Itabashi-ku Tokyo 173-0001 (JP)
(72) Inventor: KAKIUCHI, Yasuhiko, Tokyo 173-0001 (JP); TSUCHIBUCHI, Koji, Tokyo 173-0001 (JP); KUBO, Shuhei, Tokyo 173-0001 (JP)
(74) Representative: Gille Hrabal Partnerschaftsgesellschaft mbB Patentanwälte
(86) International application number: PCT/JP2024/037441
(87) International publication number: WO 2025/094747

(57) **Abstract**

A high-frequency dielectric heating adhesive (1A) contains a thermoplastic resin (A) and a dielectric filler (B). When a cut surface obtained by cutting the high-frequency dielectric heating adhesive (1A) along a thickness direction is observed with a scanning electron microscope, a relationship of the nearest centroid-to-centroid distance Dg to the particle diameter Dn of the dielectric filler (B) satisfies Formula (F1) below, $1.55 \leq Dg / Dn \leq 1.85$

## Description

### TECHNICAL FIELD

The present invention relates to a high-frequency dielectric heating adhesive.

### BACKGROUND ART

Dielectric composite materials including a resin and a filler formed of an inorganic compound have typically been proposed.

Patent Literature 1 discloses a dielectric composite material having the following configurations.
(1) The dielectric composite material includes: a matrix formed of a resin; and filler particles dispersed in the matrix.
(2) The filler particles are formed of a perovskite-type compound, and have a full width at half maximum of an X-ray diffraction peak of the (111) plane of 0.20 degrees or less, a ratio of the length of the c-axis to the length of the a-axis (c/a axis ratio) obtained from powder X-ray diffraction of 1.006 or more, and a uniformity number (n) of a Rosin-Rammler distribution function of 2.3 or more.
(3) A coefficient of variation of interparticle distances of the filler particles dispersed in the matrix is 0.9 or less.

As a method of bonding adherends using an adhesive, a method of bonding adherends by high-frequency dielectric heating treatment or the like has been proposed.

The adhesive disclosed in Patent Literature 2 is formed by filling an adhesive base material, which has affinity with a base material to be bonded, with a dielectric heating medium having dielectric heating properties. Provided that a relative permittivity is ε', a dielectric loss tangent is tanδ, and the total thickness of the base material to be bonded is d (mm), the adhesive satisfies $C \times \left\{\left(tanδ\right)/ε′\right\} 1 / 2 \geq d ,$ where the coefficient C is in a range from 78 to 85.

Patent Literature 3 discloses a resin composition for dielectric heating adhesion. The resin composition contains a polyolefin resin having a melting point in a range from 80 to 200 degrees C and a conductive substance having a volume resistivity of 10⁻² Ω·cm or less, in which a content of the conductive substance is in a range from 1 to 30 vol% based on the entire resin composition. The resin composition for dielectric heating adhesion has a dielectric loss tangent of 0.03 or more at a frequency of 40 MHz under a condition of 23 degrees C.

### CITATION LIST

### PATENT LITERATURE(S)

Patent Literature 1: JP 2019-065094 A
Patent Literature 2: JP 2014-037489 A
Patent Literature 3: JP 2003-193009 A

### SUMMARY OF THE INVENTION

### PROBLEM(S) TO BE SOLVED BY THE INVENTION

The dielectric composite material disclosed in Patent Literature 1 is a material used in capacitors and the like. Materials used in capacitors are required to have a low dielectric loss tangent in order to suppress heat generation. Therefore, the dielectric composite material disclosed in Patent Literature 1 is not suitable as a material to be applied to a high-frequency dielectric heating adhesive.

A high-frequency dielectric heating adhesive containing a thermoplastic resin and a dielectric filler can, for example, bond to an adherend in a short time and easily provide strong adhesion. The adhesive disclosed in Patent Literature 2 contains a dielectric substance as a dielectric heating medium. Regarding the adhesive disclosed in Patent Literature 2, no consideration is given to a relationship between a distance between the dielectric heating media filled in the adhesive and heat-generating property during high-frequency dielectric heating treatment (hereinafter sometimes simply referred to as "dielectric heating treatment"), nor a relationship between the distance between dielectric heating media and adhesion to an adherend.

Since the resin composition for dielectric heating adhesion disclosed in Patent Literature 3 contains a conductive substance having a volume resistivity equal to or less than a specific value as a dielectric heating medium, the volume resistivity of the resin composition for dielectric heating adhesion itself is excessively low. When the volume resistivity of the resin composition for dielectric heating adhesion itself is excessively low, dielectric breakdown may occur in the high-frequency dielectric heating adhesive during dielectric heating treatment using the high-frequency dielectric heating adhesive.

As described above, typical high-frequency dielectric heating adhesives may have a low temperature rise rate, resulting in insufficient improvement in adhesion performance. In addition, when the volume resistivity of the high-frequency dielectric heating adhesive is excessively low, dielectric breakdown during dielectric heating treatment may be a concern. Accordingly, there has been room for further improvement in typical high-frequency dielectric heating adhesives.

An object of the invention is to provide a high-frequency dielectric heating adhesive containing a thermoplastic resin and a dielectric filler, the high-frequency dielectric heating adhesive enabling firm bonding to an adherend in a shorter time while suppressing dielectric breakdown during dielectric heating treatment, as compared with typical high-frequency dielectric heating adhesives.

### MEANS FOR SOLVING THE PROBLEM(S)

[1] A high-frequency dielectric heating adhesive, including:
   a thermoplastic resin (A); and
   a dielectric filler (B), in which
   when a cut surface obtained by cutting the high-frequency dielectric heating adhesive along a thickness direction is observed with a scanning electron microscope, a relationship of a nearest centroid-to-centroid distance Dg of the dielectric filler (B) to a particle diameter Dn of the dielectric filler (B) satisfies Formula (F1) below, $1.55 \leq Dg / Dn \leq 1.85$
[2] The high-frequency dielectric heating adhesive according to [1], in which the thermoplastic resin (A) is a polyolefin resin.
[3] The high-frequency dielectric heating adhesive according to [1] or [2], in which a content of the dielectric filler (B) is in a range from 3 vol% to 40 vol% based on a total amount of the high-frequency dielectric heating adhesive.
[4] The high-frequency dielectric heating adhesive according to any one of [1] to [3], in which the dielectric filler (B) is at least one selected from the group consisting of zinc oxide, silicon carbide, and titanium oxide.
[5] The high-frequency dielectric heating adhesive according to any one of [1] to [4], in which when a cut surface obtained by cutting the high-frequency dielectric heating adhesive along the thickness direction is observed with the scanning electron microscope, the particle diameter Dn of the dielectric filler (B) is in a range from 1.0 µm to 4.0 µm.
[6] The high-frequency dielectric heating adhesive according to any one of [1] to [5], in which when a cut surface obtained by cutting the high-frequency dielectric heating adhesive along the thickness direction is observed with the scanning electron microscope, the nearest centroid-to-centroid distance Dg of the dielectric filler (B) is in a range from 2.2 µm to 6.0 µm.
[7] The high-frequency dielectric heating adhesive according to any one of [1] to [6], in which the high-frequency dielectric heating adhesive is a high-frequency dielectric heating adhesive sheet.

According to an aspect of the invention, there can be provided a high-frequency dielectric heating adhesive containing a thermoplastic resin and a dielectric filler, the high-frequency dielectric heating adhesive enabling firm bonding to an adherend in a shorter time while suppressing dielectric breakdown during dielectric heating treatment, as compared with typical high-frequency dielectric heating adhesives.

### BRIEF DESCRIPTION OF DRAWINGS

Fig. 1A is a schematic cross-sectional view illustrating an example of a high-frequency dielectric heating adhesive according to an exemplary embodiment.
Fig. 1B is a schematic cross-sectional view illustrating another example of the high-frequency dielectric heating adhesive according to the exemplary embodiment.
Fig. 1C is a schematic cross-sectional view illustrating still another example of the high-frequency dielectric heating adhesive according to the exemplary embodiment.
Fig. 2 is a schematic diagram illustrating an example of high-frequency dielectric heating treatment using the high-frequency dielectric heating adhesive and a dielectric heating apparatus according to the exemplary embodiment .
Fig. 3 is an example of a binarized image of a cut surface obtained by cutting the high-frequency dielectric heating adhesive according to the exemplary embodiment along a thickness direction.
Fig. 4 is an example of a Delaunay diagram created based on the binarized image of Fig. 3.

### DESCRIPTION OF EMBODIMENT(S)

### High-Frequency Dielectric Heating Adhesive

A high-frequency dielectric heating adhesive according to an exemplary embodiment contains a thermoplastic resin (A) and a dielectric filler (B). When a cut surface obtained by cutting the high-frequency dielectric heating adhesive along a thickness direction is observed with a scanning electron microscope, a relationship of the nearest centroid-to-centroid distance Dg of the dielectric filler (B) to a particle diameter Dn of the dielectric filler (B) satisfies Formula (F1) below. $1.55 \leq Dg / Dn \leq 1.85$

By virtue of the above configuration, during dielectric heating treatment, the high-frequency dielectric heating adhesive according to the exemplary embodiment can bond to an adherend more firmly in a shorter time while suppressing dielectric breakdown, as compared with typical high-frequency dielectric heating adhesives.

As a result of studying improvements in adhesion performance of the high-frequency dielectric heating adhesive, the inventors have found that a heat generation rate of the high-frequency dielectric heating adhesive increases and volume resistivity of the high-frequency dielectric heating adhesive changes, depending on a relationship between a particle diameter of the dielectric filler (B) and a distance between particles of the dielectric filler (B). The inventors presume as follows regarding the reason why the high-frequency dielectric heating adhesive according to the exemplary embodiment can bond more firmly to an adherend in a shorter time while suppressing dielectric breakdown, during dielectric heating treatment.

The phrase that the relationship of the nearest centroid-to-centroid distance Dg of the dielectric filler (B) to the particle diameter Dn of the dielectric filler (B) satisfies the relationship of the above Formula (F1) means that the particles of the dielectric filler (B) are spaced from each other at an appropriate distance relative to the particle diameter of the dielectric filler (B).

When the value of the above Formula (F1) in the high-frequency dielectric heating adhesive is excessively large, the distance between the particles of the dielectric filler (B) is excessively large relative to the particle diameter of the dielectric filler (B). When the distance between the particles of the dielectric filler (B) is excessively large relative to the particle diameter of the dielectric filler (B), the electric field generated between the particles of the dielectric filler (B) during dielectric heating treatment becomes weak, and inversion motion during application of high frequency decreases, thereby reducing the heat-generating property of the high-frequency dielectric heating adhesive. As a result, it is considered that the adhesion between the high-frequency dielectric heating adhesive and the adherend decreases. Therefore, when the high-frequency dielectric heating adhesive is equal to or less than the upper limit of the above Formula (F1), the heat generation rate of the high-frequency dielectric heating adhesive is improved, and the adhesive can bond to the adherend more firmly in a shorter time.

On the other hand, when the value of the above Formula (F1) is excessively small in the high-frequency dielectric heating adhesive, the distance between the particles of the dielectric filler (B) becomes excessively small relative to the particle diameter of the dielectric filler (B), whereby the volume resistivity of the high-frequency dielectric heating adhesive may decrease significantly. When the volume resistivity of the high-frequency dielectric heating adhesive decreases excessively, the high-frequency dielectric heating adhesive becomes more conductive, whereby electrical current may flow easily within the high-frequency dielectric heating adhesive during dielectric heating treatment. Therefore, it is considered that an excessive decrease in the volume resistivity of the high-frequency dielectric heating adhesive can be suppressed when the value is equal to or more than the lower limit of the above Formula (F1). As a result, it is considered that the occurrence of dielectric breakdown can be suppressed when the high-frequency dielectric heating adhesive is subjected to dielectric heating treatment.

By virtue of the above configuration, during dielectric heating treatment, the high-frequency dielectric heating adhesive according to the exemplary embodiment can bond to an adherend more firmly in a shorter time while suppressing dielectric breakdown, as compared with typical high-frequency dielectric heating adhesives.

Materials used for the high-frequency dielectric heating adhesive according to the exemplary embodiment will be described below.

### Thermoplastic Resin (A)

The type of the thermoplastic resin (A) is not particularly limited.

From the viewpoints of, for example, being easily meltable and having a predetermined heat resistance, the thermoplastic resin (A) is preferably at least one selected from the group consisting of a polyolefin resin, styrene resin, polyacetal resin, polycarbonate resin, acrylic resin, polyamide resin, polyimide resin, polyvinyl acetate resin, phenoxy resin, and polyester resin. The thermoplastic resin (A) is preferably selected as a resin having high affinity with a material of an adherend.

In the high-frequency dielectric heating adhesive according to the exemplary embodiment, the thermoplastic resin (A) is preferably a polyolefin resin or a styrene resin, more preferably a polyolefin resin. When the thermoplastic resin (A) is a polyolefin resin or a styrene resin, the high-frequency dielectric heating adhesive is easily melted upon application of a high-frequency electric field, and the high-frequency dielectric heating adhesive according to the exemplary embodiment can easily bond to an adherend.

In the present specification, the polyolefin resin includes a polyolefin resin having a polar group and a polyolefin resin having no polar group, and in order to specify the presence or absence of a polar group, the polyolefin resin is described as a polyolefin resin having a polar group or a polyolefin resin having no polar group.

The thermoplastic resin (A) is also preferably a polyolefin resin having a polar group. The thermoplastic resin (A) may be a polyolefin resin having no polar group.

### Polyolefin Resin

Examples of the polyolefin resin as the thermoplastic resin (A) include: resins that are homopolymers such as polyethylene, polypropylene, polybutene, and polymethylpentene; and α-olefin resins that are copolymers of monomers selected from the group consisting of ethylene, propylene, butene, hexene, octene, 4-methyl-1-pentene, and the like. The polyolefin resin as the thermoplastic resin (A) may be a single resin or a combination of two or more resins.

### Polyolefin Resin Having Polar Group

The polar group of the polyolefin resin having a polar group is not particularly limited as long as it is a group capable of imparting polarity to the polyolefin resin.

Further, it is preferable that the high-frequency dielectric heating adhesive contain, as the thermoplastic resin (A), a polyolefin resin having a polar group, because the dielectric property is more likely to increase and adhesion to an adherend is improved.

The polyolefin thermoplastic resin having a polar group may be a copolymer of an olefin monomer and a monomer having a polar group. Alternatively, the polyolefin thermoplastic resin having a polar group may be a resin in which a polar group is introduced into an olefin polymer obtained by polymerization of olefin monomers through modification such as an addition reaction.

The type of olefin monomer used to form the polyolefin resin having a polar group is not particularly limited. Examples of the olefin monomer include ethylene, propylene, butene, hexene, octene, and 4-methyl-1-pentene. The olefin monomer may be used alone or in a combination of two or more thereof.

From the viewpoint of excellent mechanical strength and stable adhesion properties, the olefin monomer is preferably at least one of ethylene or propylene.

The olefin-derived structural unit in the polyolefin resin having a polar group is preferably a structural unit derived from ethylene or propylene.

Examples of the polar group include a hydroxyl group, a carboxyl group, a vinyl acetate structure, and an acid anhydride structure. Examples of the polar group also include an acid-modified structure introduced into the polyolefin resin by acid modification.

An acid-modified structure serving as the polar group is a moiety introduced by acid modification of a thermoplastic resin (for example, a polyolefin resin). Examples of the compound used for acid modification of the thermoplastic resin (for example, a polyolefin resin) include an unsaturated carboxylic acid derivative component derived from any of an unsaturated carboxylic acid, an acid anhydride of an unsaturated carboxylic acid, and an ester of an unsaturated carboxylic acid. In the present specification, a polyolefin resin having an acid-modified structure may be referred to as an acid-modified polyolefin resin.

Examples of the unsaturated carboxylic acid include acrylic acid, methacrylic acid, maleic acid, fumaric acid, itaconic acid, and citraconic acid.

Examples of the acid anhydride of the unsaturated carboxylic acid include maleic anhydride, itaconic anhydride, and citraconic anhydride.

Examples of the ester of the unsaturated carboxylic acid include methyl acrylate, ethyl acrylate, methyl methacrylate, ethyl methacrylate, butyl methacrylate, dimethyl maleate, monomethyl maleate, dimethyl fumarate, diethyl fumarate, dimethyl itaconate, diethyl itaconate, dimethyl citraconate, diethyl citraconate, and dimethyl tetrahydrophthalic anhydride.

### Maleic Anhydride-Modified Polyolefin

The polyolefin resin as the thermoplastic resin more preferably has an acid anhydride structure as the acid-modified structure. The acid anhydride structure is preferably a structure introduced when the polyolefin resin is modified with maleic anhydride.

The olefin-derived structural unit in the maleic anhydride-modified polyolefin is preferably a structural unit derived from ethylene or propylene. That is, the maleic anhydride-modified polyolefin is preferably a maleic anhydride-modified polyethylene resin or a maleic anhydride-modified polypropylene resin.

### Dielectric Filler (B)

The dielectric filler (B), which is a material preferable as a dielectric material, will be described.

The dielectric filler (B) is a filler that generates heat when a high-frequency electric field is applied. The high-frequency electric field is an electric field whose direction is reversed at a high frequency.

The dielectric filler (B) is preferably a filler that generates heat when a high-frequency electric field having a frequency in a range from 3 MHz to 300 MHz is applied. The dielectric filler (B) is preferably a filler that generates heat when a high-frequency electric field having a frequency of, for example, 13.56 MHz, 27.12 MHz, or 40.68 MHz, within the frequency range of 3 MHz to 300 MHz is applied.

The dielectric filler (B) is preferably one or a combination of two or more selected from zinc oxide, silicon carbide (SiC), anatase-type titanium oxide, barium titanate, barium zirconate titanate, lead titanate, potassium niobate, rutile-type titanium oxide, hydrated aluminum silicate, inorganic materials having water of crystallization, such as hydrated aluminosilicates of alkali metals, and inorganic materials having water of crystallization, such as hydrated aluminosilicates of alkaline earth metals. The dielectric filler (B) may be one or a combination of two or more selected from zinc oxide, silicon carbide (SiC), anatase-type titanium oxide, rutile-type titanium oxide, hydrated aluminum silicate, inorganic materials having water of crystallization, such as hydrated aluminosilicates of alkali metals, and inorganic materials having water of crystallization, such as hydrated aluminosilicates of alkaline earth metals.

The dielectric filler (B) is preferably at least one selected from the group consisting of zinc oxide, silicon carbide, and titanium oxide from the viewpoint of obtaining higher heat-generating property, more preferably at least one of zinc oxide or titanium oxide.

Among the exemplified dielectric fillers, zinc oxide is available in a wide variety of types and can be selected from various shapes and sizes, so that the adhesion properties and mechanical properties of the high-frequency dielectric heating adhesive can be improved according to the intended application. Therefore, the dielectric filler (B) is still more preferably zinc oxide. By using zinc oxide as the dielectric filler (B), a high-frequency dielectric heating adhesive having low transmittance without impairing designability can be obtained. Since zinc oxide does not have excessively high hardness among ceramics, it is less likely to damage a manufacturing apparatus for the high-frequency dielectric heating adhesive. Zinc oxide is an inert oxide and therefore causes little damage to the thermoplastic resin even when blended with the thermoplastic resin.

Further, the titanium oxide used as the dielectric filler (B) is preferably at least one of anatase-type titanium oxide or rutile-type titanium oxide, more preferably anatase-type titanium oxide from the viewpoint of excellent dielectric property.

The shape of the dielectric filler (B) is not particularly limited, and various shapes may be employed. From the viewpoint of manufacturing cost and the like of the dielectric filler (B), the shape of the dielectric filler (B) preferably has, for example, an irregular shape or a spherical shape, more preferably an irregular shape. In the present specification, the phrase that the dielectric filler (B) has an irregular shape means that the dielectric filler (B) does not have a specific shape such as a true spherical shape or a cubic shape. From the same viewpoint, it is also preferable that the dielectric filler (B) is not subjected to surface modification. In the present specification, the phrase that the dielectric filler (B) is not subjected to surface modification means that the surface of the dielectric filler (B) is not treated so as to be modified by introduction of an organic group.

The volume content of the dielectric filler (B) in the high-frequency dielectric heating adhesive is preferably 2 vol% or more, more preferably 3 vol% or more, still more preferably 4 vol% or more, still further more preferably 6 vol% or more, and yet still further more preferably 8 vol% or more.

The volume content of the dielectric filler (B) in the high-frequency dielectric heating adhesive is preferably 40 vol% or less, more preferably 35 vol% or less, still more preferably 30 vol% or less, still further more preferably 25 vol% or less, and yet still further more preferably 22 vol% or less.

When the volume content of the dielectric filler (B) in the high-frequency dielectric heating adhesive is 2 vol% or more, heat-generating property is improved, and the high-frequency dielectric heating adhesive and an adherend can be easily bonded to each other firmly.

When the volume content of the dielectric filler (B) in the high-frequency dielectric heating adhesive is 40 vol% or less, a decrease in the strength of the adhesive can be prevented, and as a result, a decrease in the adhesion strength can be prevented by using the adhesive. Further, when the high-frequency dielectric heating adhesive according to the exemplary embodiment is in the form of an adhesive sheet and the volume content of the dielectric filler (B) is 40 vol% or less, flexibility in the form of a sheet can be easily obtained and a decrease in toughness can be easily prevented, thereby facilitating processing of the high-frequency dielectric heating adhesive sheet into a desired shape in a subsequent step.

When a cut surface obtained by cutting the high-frequency dielectric heating adhesive along the thickness direction is observed with a scanning electron microscope (hereinafter, SEM: Scanning Electron Microscope), the particle diameter Dn of the dielectric filler (B) is preferably in a range from 1.0 µm to 4.0 µm. In the present specification, the particle diameter Dn of the dielectric filler (B) represents a number average value based on an arithmetic mean of particle diameters measured by a measurement method described later.

The particle diameter Dn of the dielectric filler (B) is preferably 1.1 µm or more, more preferably 1.2 µm or more, and still more preferably 1.3 µm or more.

The particle diameter Dn of the dielectric filler (B) is preferably 3.8 µm or less, more preferably 3.6 µm or less, still more preferably 3.4 µm or less, and still further more preferably 3.2 µm or less.

When the particle diameter Dn of the dielectric filler (B) is 1.0 µm or more, the high-frequency dielectric heating adhesive exhibits high heat-generating performance upon application of a high-frequency electric field and can firmly bond to an adherend in a short time.

When the particle diameter Dn of the dielectric filler (B) is 4.0 µm or less, the high-frequency dielectric heating adhesive exhibits high heat-generating performance upon application of a high-frequency electric field and can firmly bond to an adherend in a short time. Further, when the high-frequency dielectric heating adhesive according to the exemplary embodiment is in the form of an adhesive sheet and the particle diameter Dn of the dielectric filler (B) is 4.0 µm or less, a decrease in the strength of the high-frequency dielectric heating adhesive sheet can be prevented.

When a cut surface obtained by cutting the high-frequency dielectric heating adhesive along a thickness direction is observed with the SEM, the nearest centroid-to-centroid distance Dg of the dielectric filler (B) is preferably in a range from 2.2 µm to 6.0 µm. In the present specification, the nearest centroid-to-centroid distance Dg of the dielectric filler (B) represents an average value of the nearest centroid-to-centroid distances measured by a measurement method described later. The nearest centroid-to-centroid distance refers to a distance between a centroid of one particle of the dielectric filler (B) and a centroid of the particle closest to the one particle. That is, among adjacent particles in the dielectric fillers (B), the nearest centroid-to-centroid distance means a distance from a centroid of one particle of the dielectric filler (B) to a centroid of the other particle located closest thereto. Here, the phrase that adjacent particles in the dielectric fillers (B) includes both cases where (i) one particle and another particle are in direct contact with each other, and (ii) one particle and another particle are not in direct contact and are spaced apart from each other with a certain distance therebetween.

The nearest centroid-to-centroid distance Dg of the dielectric filler (B) is preferably 2.3 µm or more, more preferably 2.4 µm or more, and still more preferably 2.5 µm or more.

The nearest centroid-to-centroid distance Dg of the dielectric filler (B) is preferably 5.8 µm or less, more preferably 5.6 µm or less, still more preferably 5.4 µm or less, and still further more preferably 5.2 µm or less.

When the nearest centroid-to-centroid distance Dg of the dielectric filler (B) is 2.2 µm or more, the high-frequency dielectric heating adhesive exhibits high heat-generating performance upon application of a high-frequency electric field and can firmly bond to an adherend in a short time. Further, when the nearest centroid-to-centroid distance Dg of the dielectric filler (B) is 2.2 µm or more, a decrease in the volume resistivity of the high-frequency dielectric heating adhesive can be suppressed.

When the nearest centroid-to-centroid distance Dg of the dielectric filler (B) is 6.0 µm or less, the high-frequency dielectric heating adhesive exhibits high heat-generating performance upon application of a high-frequency electric field and can firmly bond to an adherend in a short time. Further, when the high-frequency dielectric heating adhesive according to the exemplary embodiment is an adhesive sheet, if the nearest centroid-to-centroid distance Dg of the dielectric filler (B) is 6.0 µm or less, a decrease in the strength of the high-frequency dielectric heating adhesive sheet can be prevented.

### Additive

The high-frequency dielectric heating adhesive according to the exemplary embodiment may or may not contain an additive within a range that does not impair adhesion in a short time.

When the high-frequency dielectric heating adhesive according to the exemplary embodiment contains an additive, examples of the additive include a tackifier, a plasticizer, a wax, a colorant, an antioxidant, an ultraviolet absorber, an antibacterial agent, a coupling agent, a viscosity modifier, an organic filler, and an inorganic filler. The organic filler and the inorganic filler as the additive are different from the dielectric filler.

The tackifier and the plasticizer can improve the melting properties and adhesion properties of the high-frequency dielectric heating adhesive.

Examples of the tackifier include rosin derivatives, polyterpene resins, aromatic-modified terpene resins, hydrogenated products of aromatic-modified terpene resins, terpene phenol resins, coumarone-indene resins, aliphatic petroleum resins, aromatic petroleum resins, and hydrogenated products of aromatic petroleum resins.

Examples of the plasticizer include petroleum-based process oils, natural oils, dialkyl dibasic acid esters, and low-molecular-weight liquid polymers. Examples of the petroleum-based process oil include paraffinic process oils, naphthenic process oils, and aromatic process oils. Examples of the natural oil include castor oil and tall oil. Examples of the dialkyl dibasic acid ester include dibutyl phthalate, dioctyl phthalate, and dibutyl adipate. Examples of the low-molecular-weight liquid polymer include liquid polybutene and liquid polyisoprene.

When the high-frequency dielectric heating adhesive according to the exemplary embodiment contains an additive, the content of the additive in the high-frequency dielectric heating adhesive is preferably 0.01 mass% or more, more preferably 0.05 mass% or more, and still more preferably 0.1 mass% or more, based on the total amount of the high-frequency dielectric heating adhesive. Further, the content of the additive in the high-frequency dielectric heating adhesive is preferably 20 mass% or less, more preferably 15 mass% or less, and still more preferably 10 mass% or less.

The high-frequency dielectric heating adhesive according to the exemplary embodiment preferably does not contain a solvent. According to the high-frequency dielectric heating adhesive that does not contain a solvent, issues caused by volatile organic compounds derived from the adhesive used for bonding to an adherend are less likely to occur.

The high-frequency dielectric heating adhesive according to the exemplary embodiment preferably does not contain a conductive substance such as carbon, a carbon compound containing carbon as a main component, or a metal. For example, the high-frequency dielectric heating adhesive according to the exemplary embodiment preferably does not contain carbon steel, α-iron, γ-iron, δ-iron, copper, iron oxide, brass, aluminum, iron-nickel alloys, iron-nickel-chromium alloys, carbon fibers, or carbon black.

When the high-frequency dielectric heating adhesive according to the exemplary embodiment contains a conductive substance, the content of the conductive substance in the adhesive is, each independently, preferably 7 mass% or less, more preferably 6 mass% or less, still more preferably 5 mass% or less, still further more preferably 1 mass% or less, and yet still further more preferably 0.1 mass% or less, based on the total amount of the adhesive.

The content of the conductive substance in the adhesive is particularly preferably 0 mass%.

When the content of the conductive substance in the adhesive is 7 mass% or less, it becomes easier to prevent adverse effects such as dielectric breakdown and carbonization of the bonded portion and the adherend during dielectric heating treatment.

The total content of the thermoplastic resin (A) and the dielectric filler (B) in the high-frequency dielectric heating adhesive according to the exemplary embodiment is preferably 80 mass% or more, more preferably 90 mass% or more, still more preferably 93 mass% or more, still further more preferably 95 mass% or more, and yet still further more preferably 99 mass% or more.

### Properties of High-Frequency Dielectric Heating Adhesive

Next, properties of the high-frequency dielectric heating adhesive according to the exemplary embodiment will be described.

### Nearest Centroid-to-Centroid Distance Dg / Particle Diameter Dn

In the high-frequency dielectric heating adhesive according to the exemplary embodiment, when a cut surface obtained by cutting the high-frequency dielectric heating adhesive along the thickness direction is observed with the SEM, a relationship (Dg/Dn) of the nearest centroid-to-centroid distance Dg of the dielectric filler (B) to the particle diameter Dn of the dielectric filler (B) satisfies the relationship of the above Formula (F1). That is, a ratio of the nearest centroid-to-centroid distance Dg of the dielectric filler (B) to the particle diameter Dn of the dielectric filler (B) is in a range from 1.55 to 1.85. From the viewpoint of enabling firm bonding to an adherend in a shorter time while suppressing dielectric breakdown during dielectric heating treatment, the ratio of the nearest centroid-to-centroid distance Dg of the dielectric filler (B) to the particle diameter Dn of the dielectric filler (B) is more preferably 1.56 or more, still more preferably 1.57 or more. From the viewpoint of enabling firm bonding to an adherend in a shorter time, the ratio of the nearest centroid-to-centroid distance Dg of the dielectric filler (B) to the particle diameter Dn of the dielectric filler (B) is preferably 1.83 or less, more preferably 1.80 or less, still more preferably 1.75 or less, and still further more preferably 1.70 or less.

In the exemplary embodiment, the particle diameter Dn of the dielectric filler (B), the nearest centroid-to-centroid distance Dg of the dielectric filler (B), and the ratio of the nearest centroid-to-centroid distance Dg of the dielectric filler (B) to the particle diameter Dn of the dielectric filler (B) are measured according to the procedures described in (1) to (5) below.

### Procedure (1):

A cut surface obtained by cutting the high-frequency dielectric heating adhesive along the thickness direction is polished using a cross-section processing apparatus, and is observed in at least one field of view at a magnification of 500× or more using the SEM. The cross-section processing apparatus is preferably an apparatus that processes the cut surface using an ion beam, from the viewpoint of enabling efficient processing.

### Procedure (2):

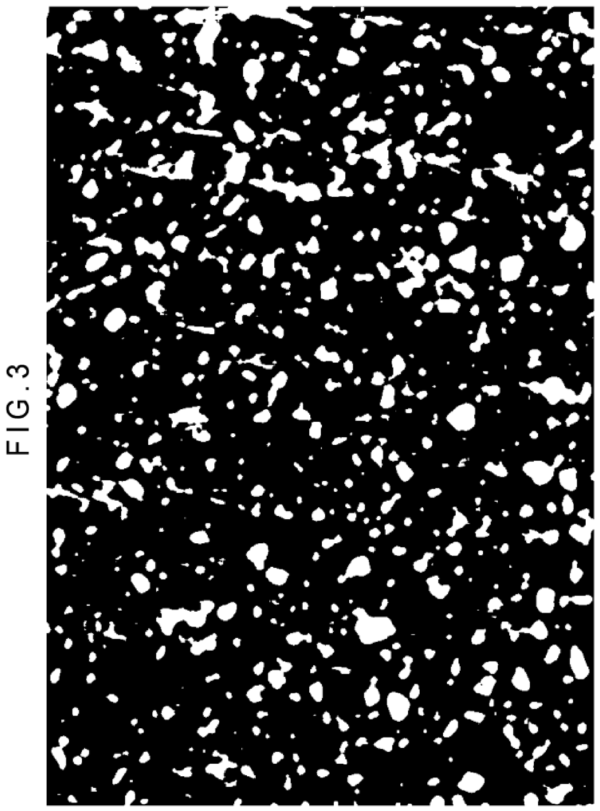

The obtained SEM image is subjected to binarization processing using image analysis software, and clusters obtained from the binarized image (hereinafter, Binary Large Object: Blob) are detected as particles of the dielectric filler (B). The Blob is a region in which pixels determined to be white in the binarized image are connected adjacently. An example of the binarized image obtained by the above binarization processing is illustrated in Fig. 3. The binarized image illustrated in Fig. 3 is a binarized image obtained by Otsu's binarization method. In the binarized image illustrated in Fig. 3, white portions represent particles of the dielectric filler (B).

### Procedure (3):

By performing Blob analysis on the detected particles of the dielectric filler (B), the equivalent circle diameters of 100 or more particles of the dielectric filler (B) to be measured are determined. The number average value based on the arithmetic mean of the measured equivalent circle diameters is calculated as the particle diameter Dn of the dielectric filler (B) using the numpy mean function.

### Procedure (4):

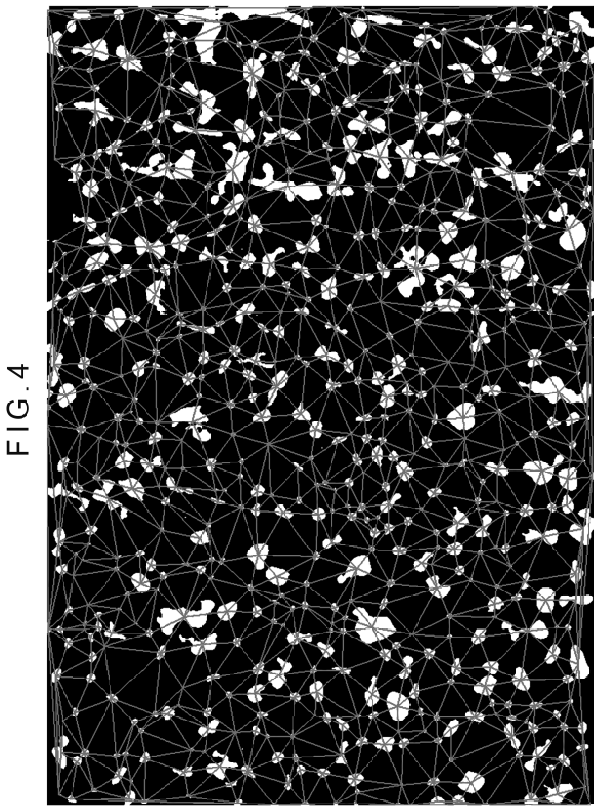

For the particles of the dielectric filler (B) to be measured in Procedure (3) above, centroids of the particles are determined using the OpenCV moments function. Next, a Delaunay diagram connecting the determined centroids of the particles is created using the OpenCV Subdiv2D function. Three edges of each triangle in the created Delaunay diagram are compared, and among the three compared edges of the triangle, the length of the shortest edge is measured as the nearest centroid-to-centroid distance. Then, an average value of 100 or more measured nearest centroid-to-centroid distances is defined as the nearest centroid-to-centroid distance Dg. An example of a Delaunay diagram created based on the binarized image obtained in Procedure (2) above is illustrated in Fig. 4. The line segments illustrated in Fig. 4 are edges connecting the centroids of particles of the dielectric filler (B). As illustrated in Fig. 4, a triangle is formed by three edges connecting the centroids. The edges forming a triangle are compared, and the shortest edge among the compared edges is measured as the nearest centroid-to-centroid distance. An average value of 100 or more measured nearest centroid-to-centroid distances is defined as the nearest centroid-to-centroid distance Dg.

### Procedure (5):

The nearest centroid-to-centroid distance Dg obtained in Procedure (4) above is divided by the particle diameter Dn obtained in Procedure (3) above to calculate the ratio of the nearest centroid-to-centroid distance Dg to the particle diameter Dn (nearest centroid-to-centroid distance Dg / particle diameter Dn).

The particle diameter Dn of the dielectric filler (B), the nearest centroid-to-centroid distance Dg of the dielectric filler (B), and the ratio of the nearest centroid-to-centroid distance Dg to the particle diameter Dn of the dielectric filler (B) are specifically determined by the method described in Examples below.

### Volume Resistivity

The volume resistivity of the high-frequency dielectric heating adhesive according to the exemplary embodiment is preferably 1.0 × 10¹³ Ω·cm or more. The volume resistivity of the high-frequency dielectric heating adhesive according to the exemplary embodiment is preferably 1.0 × 10¹⁴ Ω·cm or more, more preferably 1.0 × 10¹⁵ Ω·cm or more, and still more preferably 1.0 × 10¹⁶ Ω·cm or more. The upper limit of the volume resistivity of the high-frequency dielectric heating adhesive according to the exemplary embodiment is not particularly limited and may be, for example, 1.0 × 10¹⁸ Ω·cm or less. For example, when the volume resistivity of the high-frequency dielectric heating adhesive according to the exemplary embodiment is 1.0 × 10¹³ Ω·cm or more, dielectric breakdown during dielectric heating treatment is more likely to be suppressed. As a result, firm bonding to an adherend in a short time becomes easier while dielectric breakdown during dielectric heating treatment is suppressed. The volume resistivity is specifically determined by the method described in Examples below. When the volume resistivity of the high-frequency dielectric heating adhesive is less than 1.0 × 10¹³ Ω·cm, dielectric breakdown during dielectric heating treatment does not necessarily occur immediately, but becomes more likely to occur. As the volume resistivity of the high-frequency dielectric heating adhesive decreases, dielectric breakdown during dielectric heating treatment becomes more likely to occur. For example, as the volume resistivity of the high-frequency dielectric heating adhesive decreases to 1.0 × 10¹⁰ Ω·cm or less, dielectric breakdown during dielectric heating treatment becomes more likely to occur. Therefore, when the volume resistivity of the high-frequency dielectric heating adhesive according to the exemplary embodiment is, for example, 1.0 × 10¹³ Ω·cm or more, dielectric breakdown during dielectric heating treatment is more likely to be suppressed.

### Dielectric Property

The dielectric property (tanδ/ε'r) of the high-frequency dielectric heating adhesive according to the exemplary embodiment will be described. In the high-frequency dielectric heating adhesive according to the exemplary embodiment, the dielectric property (tanδ/ε'r) is preferably 0.004 or more.
Here, tanδ is a dielectric loss tangent at 23 degrees C and a frequency of 40.68 MHz, and ε'r is a relative permittivity at 23 degrees C and a frequency of 40.68 MHz.

When the dielectric property of the high-frequency dielectric heating adhesive is 0.004 or more, during dielectric heating treatment, the high-frequency dielectric heating adhesive is more likely to generate heat, making it easier to firmly bond the high-frequency dielectric heating adhesive to an adherend in a short time.

Even when the dielectric property of the high-frequency dielectric heating adhesive is 0.004 or more, if the relationship (Dg/Dn) between the particle diameter of the dielectric filler (B) and the distance between particles of the dielectric filler (B) does not satisfy the relationship of the above Formula (F1), it may be difficult to sufficiently obtain the effect of achieving firm bonding to an adherend in a shorter time while suppressing dielectric breakdown during dielectric heating treatment.

The dielectric property of the high-frequency dielectric heating adhesive according to the exemplary embodiment is more preferably 0.005 or more, still more preferably 0.008 or more, and still further more preferably 0.010 or more.

When the dielectric property of the high-frequency dielectric heating adhesive according to the exemplary embodiment is 0.008 or more, during dielectric heating treatment, the high-frequency dielectric heating adhesive is more likely to generate heat, making it easier to firmly bond the high-frequency dielectric heating adhesive to an adherend in a short time.

The upper limit of the dielectric property of the high-frequency dielectric heating adhesive according to the exemplary embodiment is not particularly limited. However, from the viewpoint of suppressing overheating of the high-frequency dielectric heating adhesive, the dielectric property is preferably 0.04 or less, more preferably 0.02 or less, still more preferably 0.014 or less, and particularly preferably 0.011 or less.

When the dielectric property of the high-frequency dielectric heating adhesive is 0.04 or less, overheating can be more likely to be suppressed, and damage to a portion where the adherend and the high-frequency dielectric heating adhesive are in contact is less likely to occur. When the heat resistance of the adherend is low and thermal influence on the adherend due to overheating is of concern, the upper limit of the dielectric property of the high-frequency dielectric heating adhesive is preferably, for example, 0.011 or less. In this case, the dielectric property of the high-frequency dielectric heating adhesive is preferably, for example, in a range from 0.004 to 0.011.

The dielectric property (tanδ/ε'r) represents a value obtained by dividing the dielectric loss tangent (tanδ) measured using an impedance/material analyzer or the like by the relative permittivity (ε'r) measured using an impedance material analyzer or the like.

The dielectric loss tangent (tanδ) and the relative permittivity (ε'r) as the dielectric properties of the high-frequency dielectric heating adhesive can be measured simply and accurately using an impedance/material analyzer.

Details of the method for measuring the dielectric properties of the high-frequency dielectric heating adhesive and the adherend are as follows. First, a sample sheet of the high-frequency dielectric heating adhesive is obtained. When it is necessary to obtain a sample sheet from a bonded body, a sample sheet having a uniform thickness is obtained by cutting out or shaving off a portion from the bonded body. For a high-frequency dielectric heating adhesive that is not in the form of a sheet, for example, a pellet-shaped high-frequency dielectric heating adhesive, a sample sheet is obtained by forming the adhesive into sheet using a hot press or the like. The thickness of the sample sheet is, for example, in a range from 10 µm to 2 mm. For the sheet thus obtained, the relative permittivity (ε'r) and the dielectric loss tangent (tanδ) are measured under conditions of a frequency of 40.68 MHz at 23 degrees C using an RF impedance/material analyzer E4991A (manufactured by Agilent), and the value of the dielectric property (tanδ/ε'r) is calculated.

### Shape of High-Frequency Dielectric Heating Adhesive

The shape of the high-frequency dielectric heating adhesive according to the exemplary embodiment is not particularly limited. For example, the high-frequency dielectric heating adhesive according to the exemplary embodiment may be an adhesive in the form of a molded body obtained by injection molding or the like and molded into a desired shape, or may be a sheet-shaped adhesive obtained by extrusion molding or the like. In the exemplary embodiment, a molded body and a sheet have different shapes. A "sheet" generally refers to a form in a long strip or cut-sheet shape, having a thickness of 1 mm or less, 2 mm or less, or 5 mm or less. A molded body refers to various shapes other than a sheet, obtained by molding a material that includes the components of the high-frequency dielectric heating adhesive.

The high-frequency dielectric heating adhesive according to the exemplary embodiment is preferably in the form of a sheet. That is, the high-frequency dielectric heating adhesive according to the exemplary embodiment is preferably a high-frequency dielectric heating adhesive sheet (also referred to as an adhesive sheet). When the high-frequency dielectric heating adhesive is in the form of an adhesive sheet, the time required for a manufacturing process of a bonded body can be further shortened.

The shape of the high-frequency dielectric heating adhesive according to the exemplary embodiment may be a frame-shaped sheet (frame-shaped adhesive sheet) including a frame portion and an opening penetrating from one surface to the other surface among mutually facing surfaces. The shape of the opening is not particularly limited. When the adhesive sheet has a frame shape, the frame-shaped adhesive sheet may have one opening or two or more openings. The frame-shaped sheet may have a cutout in a part of the frame portion. In this case, the resulting opening may have a shape such that the part of the frame portion communicates with an outside of the frame portion. That is, in a plan view of the frame-shaped sheet, the frame portion may have an open shape (for example, a shape in which the frame portion is discontinuous, such as a C-shape or a U-shape). The frame-shaped sheet may have no cutout in the frame portion. In this case, the resulting opening may have a shape such that a periphery of the opening is surrounded by the frame portion (for example, a shape in which the frame portion is continuous, such as an O-shape). That is, in a plan view of the frame-shaped sheet, the frame portion may have a closed shape. When the frame-shaped sheet has two or more openings, the shapes of the openings may be such that openings having the same shape are combined in a plan view of the frame-shaped sheet, or openings having different shapes are combined. The shape of the high-frequency dielectric heating adhesive according to the exemplary embodiment may be a sheet without the openings. Further, the high-frequency dielectric heating adhesive according to the exemplary embodiment can also be formed into an adhesive sheet having a desired shape by a molding method such as extrusion molding or injection molding.

One embodiment of the high-frequency dielectric heating adhesive according to the exemplary embodiment consists of a single adhesive layer formed of the high-frequency dielectric heating adhesive sheet according to the exemplary embodiment. When the high-frequency dielectric heating adhesive is a high-frequency dielectric heating adhesive sheet consisting of a single adhesive layer, the adhesive layer itself corresponds to the high-frequency dielectric heating adhesive sheet. Therefore, the form and properties of the high-frequency dielectric heating adhesive sheet correspond to the form and properties of the adhesive layer. The high-frequency dielectric heating adhesive sheet preferably consists of a single adhesive layer. Accordingly, the thickness of the high-frequency dielectric heating adhesive sheet can be reduced, and the high-frequency dielectric heating adhesive sheet can be easily formed.

Since the high-frequency dielectric heating adhesive sheet may consist of a single adhesive layer having high-frequency dielectric heating adhesion properties, in the present specification, the term "high-frequency dielectric heating adhesive sheet" and the term "adhesive layer" may sometimes be used interchangeably.

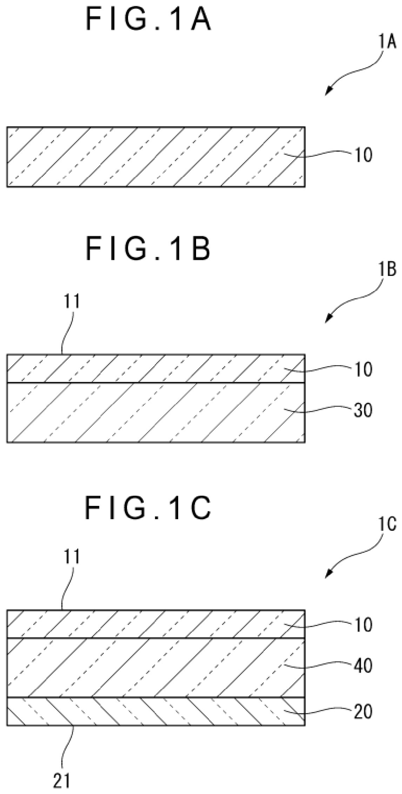

The high-frequency dielectric heating adhesive according to the exemplary embodiment is not limited to the high-frequency dielectric heating adhesive sheet consisting of a single adhesive layer. The high-frequency dielectric heating adhesive according to the exemplary embodiment may be any of the examples illustrated in Fig. 1A, Fig. 1B, and Fig. 1C.

A high-frequency dielectric heating adhesive 1A illustrated in Fig. 1A is an adhesive sheet consisting of a single adhesive layer 10.

A high-frequency dielectric heating adhesive 1B illustrated in Fig. 1B is an adhesive sheet having the adhesive layer 10 and a base material 30 supporting the adhesive layer 10. The adhesive layer 10 has a first surface 11. The base material 30 is not particularly limited as long as it is a member capable of supporting the adhesive layer 10. Examples of the base material 30 include a resin sheet containing at least one resin selected from the group consisting of a polyolefin resin, polyester resin, acetate resin, acrylonitrile-butadiene-styrene copolymer resin, polystyrene resin, and vinyl chloride resin. Examples of the polyolefin resin include polyethylene resin and polypropylene resin. Examples of the polyester resin include polybutylene terephthalate resin and polyethylene terephthalate resin. The base material 30 may contain a dielectric filler. The dielectric filler (B) in the adhesive layer 10 and the dielectric filler in the base material 30 may be mutually the same or different.

A high-frequency dielectric heating adhesive 1C illustrated in Fig. 1C is an adhesive sheet having an intermediate layer 40 disposed between the adhesive layer 10 and an adhesive layer 20. The high-frequency dielectric heating adhesive 1C has the first surface 11 and a second surface 21 opposite to the first surface 11. In the high-frequency dielectric heating adhesive 1C, it is sufficient that the adhesive layer 10 satisfies the conditions of the adhesive layer of the high-frequency dielectric heating adhesive sheet according to the exemplary embodiment. In one embodiment, both the adhesive layer 10 and the adhesive layer 20 are layers having the same composition and properties. In one embodiment, the adhesive layer 20 is a layer having high-frequency dielectric heating adhesion properties and is different from the adhesive layer 10 in at least one of composition or properties. In one embodiment, the adhesive layer 20 is a layer of a general adhesive, which is a layer having no high-frequency dielectric heating adhesion properties. In this case, examples of the adhesive layer 20 having no high-frequency dielectric heating adhesion properties include a layer of a drying-solidification type adhesive that dries and solidifies by evaporation of water or a solvent, or a layer of a pressure-sensitive adhesive formed from a pressure-sensitive adhesive.

When the high-frequency dielectric heating adhesive according to the exemplary embodiment is an adhesive sheet consisting of a single adhesive layer, the thickness of the adhesive sheet according to the exemplary embodiment is preferably 5 µm or more, more preferably 10 µm or more, still more preferably 30 µm or more, and particularly preferably 50 µm or more.

When the thickness of the adhesive sheet is 5 µm or more, heat-generating property of the adhesive sheet in contact with an adherend upon application of a high-frequency electric field is improved, so that the adhesive sheet and the adherend are easily bonded firmly in a short time. Further, when the adhesive sheet is bonded to the adherend, the adhesive sheet can easily conform to irregularities of the adherend, and adhesive strength is more likely to be exhibited.

When the adhesive sheet has a multilayer structure including a plurality of layers, the thickness of the adhesive layer is preferably 5 µm or more, more preferably 10 µm or more, still more preferably 30 µm or more, and still further more preferably 50 µm or more.

When the high-frequency dielectric heating adhesive sheet is a sheet having a multilayer structure and the thickness of the adhesive layer is 5 µm or more, the adhesive layer can easily conform to irregularities of the adherend when bonding to the adherend, and adhesive strength can be easily achieved.

The upper limit of the thickness of the adhesive sheet is not particularly limited. As the thickness of the adhesive sheet increases, the weight of the entire bonded body obtained by bonding the adhesive sheet and the adherend also increases. Therefore, the adhesive sheet preferably has a thickness within a range that does not cause practical difficulties in actual use, for example, in terms of processability and handleability. Considering also the practicality and moldability of the high-frequency dielectric heating adhesive sheet, the thickness of the adhesive sheet according to the exemplary embodiment is preferably 2,000 µm or less, more preferably 1,000 µm or less, and still more preferably 600 µm or less. The upper limit of the thickness of the adhesive sheet is preferably the above value regardless of whether the adhesive sheet consists of a single adhesive layer or has a multilayer structure including the adhesive layer.

The adhesive sheet as the high-frequency dielectric heating adhesive is easier to handle than a liquid adhesive that requires coating, and workability during bonding to an adherend is also improved.

The thickness and the like of the adhesive sheet as the high-frequency dielectric heating adhesive can be appropriately controlled. Therefore, the adhesive sheet can be applied to a roll-to-roll process, and can also be processed into any area and shape according to a bonding area with an adherend and a shape of the adherend by punching or the like. Accordingly, the adhesive sheet as the high-frequency dielectric heating adhesive also provides significant advantages from the viewpoint of the manufacturing process.

The high-frequency dielectric heating adhesive according to the exemplary embodiment is preferably used by applying a high-frequency electric field in a frequency band referred to as so-called short waves to ultra-short waves. When the high-frequency electric field in the frequency band is applied, the heat-generating property during the high-frequency application is improved because the depth of heating is large. Accordingly, even when the thickness of the high-frequency dielectric heating adhesive is large, the adhesive sheet and the adherend can be easily bonded firmly in a short time.

### Method for Producing High-Frequency Dielectric Heating Adhesive

The high-frequency dielectric heating adhesive according to the exemplary embodiment can be produced, for example, by mixing the above-described components. When the high-frequency dielectric heating adhesive according to the exemplary embodiment is in the form of an adhesive sheet, the adhesive sheet can be produced, for example, by premixing the above-described components, kneading the mixture using a known kneading apparatus such as an extruder or a heat roll, and then forming the mixture by a known molding method such as extrusion molding, calendar molding, injection molding, or casting molding. When the high-frequency dielectric heating adhesive according to the exemplary embodiment is in the form of a molded body, it can be produced, for example, by premixing the above-described components to obtain a material and forming the material by a known molding method such as injection molding or compression molding. When the high-frequency dielectric heating adhesive according to the exemplary embodiment is in the form of a frame-shaped sheet, the frame-shaped sheet can be produced by providing an opening in the sheet-shaped high-frequency dielectric heating adhesive obtained by the above-described molding method for the adhesive sheet, for example, by performing a known punching process. Alternatively, the frame-shaped sheet can be produced by using, in the above-described molding method for the adhesive sheet, a mold having a shape that provides the desired opening.

The nearest centroid-to-centroid distance Dg of the dielectric filler (B) and the ratio of the nearest centroid-to-centroid distance Dg of the dielectric filler (B) to the particle diameter Dn of the dielectric filler (B) can be adjusted, for example, by the particle diameter Dn of the dielectric filler (B), the volume content of the dielectric filler (B) in the high-frequency dielectric heating adhesive, and the like. Further, the nearest centroid-to-centroid distance Dg of the dielectric filler (B) and the ratio of the nearest centroid-to-centroid distance Dg of the dielectric filler (B) to the particle diameter Dn of the dielectric filler (B) can also be adjusted not only by the particle diameter Dn of the dielectric filler (B) and the volume content of the dielectric filler (B) in the high-frequency dielectric heating adhesive, but also, for example, by examining conditions for mixing the thermoplastic resin (A) and the dielectric filler (B) contained in the high-frequency dielectric heating adhesive according to the exemplary embodiment.

The high-frequency dielectric heating adhesive has more excellent water resistance and moisture resistance than a general pressure-sensitive adhesive.

The high-frequency dielectric heating adhesive according to the exemplary embodiment is locally heated by application of a high-frequency electric field. Therefore, according to the high-frequency dielectric heating adhesive according to the exemplary embodiment, it is easy to prevent damages of the entire adherend during bonding to the adherend.

### Adherend

A material of the adherend is not particularly limited. The material of the adherend may be an organic material, a metal material, an inorganic material, or a composite material thereof.

The material of the adherend is preferably an organic material. Examples of the organic material as the material of the adherend include a plastic material and a rubber material. Examples of the plastic material include polypropylene resin, polyethylene resin, epoxy resin, polyurethane resin, acrylonitrile-butadiene-styrene copolymer resin, polycarbonate resin, polyamide resin (such as nylon 6 and nylon 66), polyester resin (such as polyethylene terephthalate and polybutylene terephthalate resin), polyacetal resin, polymethyl methacrylate resin, and polystyrene resin. Examples of the rubber material include styrene-butadiene rubber, ethylenepropylene rubber, and silicone rubber. The adherend may also be a foamed organic material.

When the material of the adherend is a thermoplastic resin, the thermoplastic resin contained in the adherend and the thermoplastic resin (A) contained in the high-frequency dielectric heating adhesive may be different resins. In this case, bonding can be performed easily without impairing the shape of the adherend during bonding.

When the material of the adherend is a thermoplastic resin, from the viewpoint of adhesiveness, a main composition of the thermoplastic resin contained in the adherend may be the same as a main composition of the thermoplastic resin (A) contained in the high-frequency dielectric heating adhesive.

In the present specification, the "main composition of a thermoplastic resin" means, for example, when the thermoplastic resin is a polymer, the repeating unit having the largest content in the polymer among repeating units contained in the polymer. When the thermoplastic resin is a polymer derived from a single monomer, the repeating unit derived from the monomer unit is the "main composition of the thermoplastic resin." When the thermoplastic resin is a copolymer, the repeating unit that is most abundantly contained in the polymer is the "main composition of the thermoplastic resin." When the thermoplastic resin is a copolymer, the "main composition of the thermoplastic resin" is a repeating unit contained in the copolymer in a content of 30 mass% or more. In one embodiment, it is a repeating unit contained in a content of more than 30 mass%. In another embodiment, it is a repeating unit contained in a content of 40 mass% or more. In still another embodiment, it is a repeating unit contained in a content of 50 mass% or more. When the thermoplastic resin is a copolymer, the repeating unit that is most abundantly contained may be two or more types.

Examples of the inorganic material as the material of the adherend include a glass material, a cement material, a ceramic material, and a metal material. The adherend may also be a fiber-reinforced resin, which is a composite material of a fiber and the plastic material described above. The plastic material in the fiber-reinforced resin is preferably at least one selected from a polypropylene resin, a polyethylene resin, a polyurethane resin, an acrylonitrile-butadiene-styrene copolymer resin, a polycarbonate resin, a polyamide resin (e.g., nylon 6 and nylon 66), a polyester resin (e.g., a polyethylene terephthalate resin and a polybutylene terephthalate resin), a polyacetal resin, a polymethyl methacrylate resin, an epoxy resin, and a polystyrene resin. Examples of the fiber in the fiber-reinforced resin include a glass fiber, a Kevlar (registered trademark) fiber, and a carbon fiber.

### The adherend is preferably less conductive.

When a plurality of adherends are bonded to each other using the high-frequency dielectric heating adhesive according to the exemplary embodiment, the plurality of adherends are of the same material or of different materials.

The shape of the adherend is not particularly limited. However, when the high-frequency dielectric heating adhesive according to the exemplary embodiment is in the form of an adhesive sheet, the adherend preferably has a surface to which the adhesive sheet can be bonded, and is preferably in the form of a sheet, a plate, or a block. When a plurality of adherends are bonded to each other, the shapes and dimensions of the adherends may be the same as each other or different from each other.

### Bonding Method

Next, as one example of a method for bonding an adherend with the high-frequency dielectric heating adhesive according to the exemplary embodiment, a method for producing a bonded body by bonding the high-frequency dielectric heating adhesive according to the exemplary embodiment and the adherend will be described. A method for producing the bonded body by bonding the adherend using the high-frequency dielectric heating adhesive according to the exemplary embodiment includes, for example, the following steps.

In a case where a bonded body is produced by bonding one or more adherends and the high-frequency dielectric heating adhesive according to the exemplary embodiment, the method for producing the bonded body according to the exemplary embodiment includes a step of disposing the high-frequency dielectric heating adhesive according to the exemplary embodiment on one or more adherends, and a step of applying a high-frequency electric field to the high-frequency dielectric heating adhesive to bond the one or more adherends. A frequency of the high-frequency electric field to be applied is, for example, in a range from 1 MHz to 300 MHz.

In a case where a bonded body is produced by bonding two or more adherends and the high-frequency dielectric heating adhesive according to the exemplary embodiment, the method for producing the bonded body according to the exemplary embodiment includes a step of disposing the high-frequency dielectric heating adhesive according to the exemplary embodiment between the two or more adherends, and a step of applying a high-frequency electric field to the high-frequency dielectric heating adhesive to bond the two or more adherends. Also in this case, a frequency of the high-frequency electric field to be applied is, for example, in a range from 1 MHz to 300 MHz.

In the method for producing the bonded body according to the exemplary embodiment, it is preferable that two or more adherends and the high-frequency dielectric heating adhesive are disposed between electrodes of a dielectric heating apparatus, and a high-frequency electric field is applied while pressing the two or more adherends and the high-frequency dielectric heating adhesive with the electrodes. By applying the high-frequency electric field while pressing with the electrodes in this manner, the bonded body can be more easily produced in a shorter time.

In the present specification, the "dielectric heating apparatus" may also be referred to as a "high-frequency dielectric heating apparatus."

According to the method using the high-frequency dielectric heating adhesive according to the exemplary embodiment, a dielectric heating apparatus can locally heat only a predetermined portion from the outside. Therefore, even when the adherend is a large and complex three-dimensional structure, or a three-dimensional structure having a large thickness and a complex shape, and high dimensional accuracy is further required, the method using the high-frequency dielectric heating adhesive according to the exemplary embodiment is effective.

Hereinafter, as one example of the method for producing a bonded body according to the exemplary embodiment, an embodiment in which two or more adherends are bonded using the high-frequency dielectric heating adhesive according to the exemplary embodiment will be described. However, the invention is not limited to this embodiment.

A bonding method according to one embodiment of the exemplary embodiment includes the following Step P1 and Step P2.

### Step P1

Step P1 is a step of disposing the high-frequency dielectric heating adhesive according to the exemplary embodiment between two or more adherends. When a laminate is produced as the bonded body according to the exemplary embodiment, in Step P1, for example, the adherends and the high-frequency dielectric heating adhesive are alternately disposed so that the two or more adherends are laminated with the high-frequency dielectric heating adhesive interposed therebetween.

It is preferable that the high-frequency dielectric heating adhesive is interposed between the adherends so that the adherends can be bonded to each other. The high-frequency dielectric heating adhesive may be interposed at a part, at a plurality of portions, or over the entire interface between the adherends. From the viewpoint of improving the bonding strength between the adherends, it is preferable that the high-frequency dielectric heating adhesive is interposed over the entire bonding surface between the adherends.

As one embodiment in which the high-frequency dielectric heating adhesive is interposed at a part between the adherends, the high-frequency dielectric heating adhesive is disposed in a frame shape along the outer periphery of a bonding surface between the adherends and is interposed between the adherends. By disposing the high-frequency dielectric heating adhesive in a frame shape in this manner, bonding strength between the adherends can be obtained, and the bonded body can be made lighter as compared with a case in which the high-frequency dielectric heating adhesive is disposed over the entire bonding surface.

Further, according to one embodiment in which the high-frequency dielectric heating adhesive is interposed at a part between the adherends, the amount of the high-frequency dielectric heating adhesive used can be reduced or the size thereof can be reduced, and therefore the high-frequency dielectric heating treatment time can be shortened as compared with a case in which the high-frequency dielectric heating adhesive is disposed over the entire bonding surface.

### Step P2

Step P2 is a step of applying a high-frequency electric field to the high-frequency dielectric heating adhesive disposed between the adherends in Step P1 to bond two or more adherends. The frequency of the high-frequency electric field to be applied is, in one embodiment, in a range from 1 MHz to 300 MHz. For example, the high-frequency electric field can be applied to the high-frequency dielectric heating adhesive using a dielectric heating apparatus.

### Dielectric Heating Apparatus

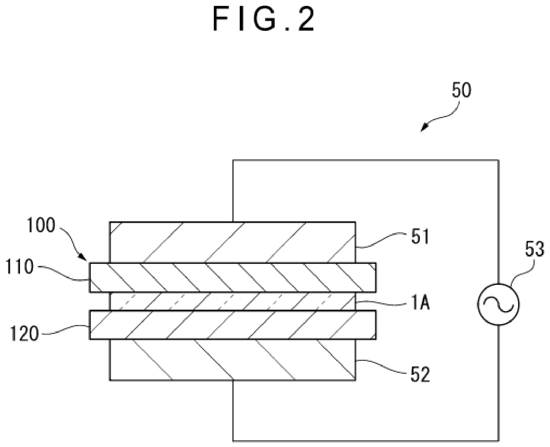

Fig. 2 illustrates a schematic diagram explaining a high-frequency dielectric heating treatment using the high-frequency dielectric heating adhesive and a dielectric heating apparatus according to the exemplary embodiment.

A dielectric heating apparatus 50 illustrated in Fig. 2 includes a first high-frequency electric field applying electrode 51, a second high-frequency electric field applying electrode 52, and a high-frequency power source 53.

The first high-frequency electric field applying electrode 51 and the second high-frequency electric field applying electrode 52 are disposed opposite each other. The first high-frequency electric field applying electrode 51 and the second high-frequency electric field applying electrode 52 have a press mechanism. By the press mechanism of the electrodes (the first high-frequency electric field applying electrode 51 and the second high-frequency electric field applying electrode 52) of the dielectric heating apparatus 50, a first adherend 110, the high-frequency dielectric heating adhesive 1A, and a second adherend 120 can be pressed between the first high-frequency electric field applying electrode 51 and the second high-frequency electric field applying electrode 52. That is, the dielectric heating apparatus 50 can apply a high-frequency electric field while pressing two or more adherends and the high-frequency dielectric heating adhesive disposed between the electrodes.

When the first high-frequency electric field applying electrode 51 and the second high-frequency electric field applying electrode 52 constitute a pair of parallel plate electrodes arranged parallel to each other, this electrode arrangement may be referred to as a parallel plate type.

For applying the high-frequency electric field, it is also preferable to use the parallel plate type high-frequency dielectric heating apparatus. When the parallel plate type high-frequency dielectric heating apparatus is used, the high-frequency electric field passes through the high-frequency dielectric heating adhesive positioned between the electrodes, so that the entire high-frequency dielectric heating adhesive can be heated, and the adherends and the high-frequency dielectric heating adhesive can be bonded in a short time. Further, in a case where a laminate as the bonded body is produced, it is preferable to use the parallel plate type high-frequency dielectric heating apparatus.

The high-frequency power source 53 for applying a high-frequency electric field, for example, having a frequency of about 13.56 MHz, about 27.12 MHz, or about 40.68 MHz, is connected to each of the first high-frequency electric field applying electrode 51 and the second high-frequency electric field applying electrode 52.

As illustrated in Fig. 2, the dielectric heating apparatus 50 performs dielectric heating treatment through the high-frequency dielectric heating adhesive 1A interposed between the first adherend 110 and the second adherend 120. Further, in addition to the dielectric heating treatment, the dielectric heating apparatus 50 bonds the first adherend 110 and the second adherend 120 by pressure application using the first high-frequency electric field applying electrode 51 and the second high-frequency electric field applying electrode 52. It is also possible to bond two or more adherends without performing the pressure application, for example, by pressing only using the self-weight of the high-frequency dielectric heating adhesive and the adherends.

When a high-frequency electric field is applied between the first high-frequency electric field applying electrode 51 and the second high-frequency electric field applying electrode 52, the high-frequency dielectric heating adhesive 1A absorbs high-frequency energy. As a result, the thermoplastic resin component in the high-frequency dielectric heating adhesive 1A is melted, and the first adherend 110 and the second adherend 120 can be firmly bonded even in a short processing time.

When a high-frequency electric field is applied between the first high-frequency electric field applying electrode 51 and the second high-frequency electric field applying electrode 52, the dielectric filler dispersed in the adhesive component of the high-frequency dielectric heating adhesive 1A absorbs high-frequency energy.

The dielectric filler then functions as a heat generation source, and the heat generated by the dielectric filler melts the thermoplastic resin component, so that the first adherend 110 and the second adherend 120 can ultimately be firmly bonded even in a short processing time.

Since the electrodes (the first high-frequency electric field applying electrode 51 and the second high-frequency electric field applying electrode 52) of the dielectric heating apparatus 50 have a press mechanism, the dielectric heating apparatus 50 also functions as a press apparatus. Therefore, by pressing in a compression direction with the first high-frequency electric field applying electrode 51 and the second high-frequency electric field applying electrode 52, and by heating and melting the high-frequency dielectric heating adhesive 1A, the first adherend 110 and the second adherend 120 can be bonded more firmly. Although the description of the method for producing the bonded body has been given by taking, as an example, a case in which a bonded body 100 illustrated in Fig. 2 is produced, the invention is not limited to this example.

### High-Frequency Dielectric Heating Conditions

The high-frequency dielectric heating conditions can be appropriately changed, but are preferably as follows.

The output of the high-frequency electric field is preferably 10 W or more, more preferably 30 W or more, still more preferably 50 W or more, and still further more preferably 80 W or more.

The output of the high-frequency electric field is preferably 50,000 W or less, more preferably 20,000 W or less, still more preferably 15,000 W or less, still further more preferably 10,000 W or less, and yet still further more preferably 1,000 W or less.

When the output of the high-frequency electric field is 10 W or more, it is possible to prevent difficulty in which the temperature does not easily rise during dielectric heating treatment, and therefore favorable bonding strength can be easily obtained.

When the output of the high-frequency electric field is 50,000 W or less, it becomes easier to prevent difficulty in temperature control caused by dielectric heating treatment. The output of the high-frequency electric field indicates the magnitude of energy transmitted to an object.

The application time of the high-frequency electric field is preferably 1 second or more.

The application time of the high-frequency electric field is preferably 300 seconds or less, more preferably 240 seconds or less, still more preferably 180 seconds or less, still further more preferably 120 seconds or less, yet still further more preferably 90 seconds or less, even still further more preferably 50 seconds or less, even still further more preferably 20 seconds or less, particularly preferably 10 seconds or less, and most preferably 6 seconds or less.

When the application time of the high-frequency electric field is 1 second or more, it is possible to prevent difficulty that the temperature does not easily rise during dielectric heating treatment, and therefore favorable bonding strength can be easily obtained.

When the application time of the high-frequency electric field is 300 seconds or less, it becomes easier to prevent a decrease in the production efficiency of the bonded body, an increase in the production cost, and thermal deterioration of the adherend.

The frequency of the high-frequency electric field to be applied is preferably 1 MHz or more, more preferably 3 MHz or more, still more preferably 5 MHz or more, and still further more preferably 10 MHz or more.

The frequency of the high-frequency electric field to be applied is preferably 300 MHz or less, more preferably 100 MHz or less, still more preferably 80 MHz or less, and still further more preferably 50 MHz or less. Specifically, industrial frequency bands of 13.56 MHz, 27.12 MHz, or 40.68 MHz allocated by the International Telecommunication Union are also used in the production method and the bonding method by high-frequency dielectric heating in the exemplary embodiment. The frequency of the high-frequency electric field to be applied indicates a manner (rate) in which energy is transmitted.

When a high-frequency electric field is applied while performing pressure application, the pressing pressure at the time of applying the high-frequency electric field, as an initial set value of the pressure applied to the high-frequency dielectric heating adhesive, is preferably 1 kPa or more, more preferably 5 kPa or more, still more preferably 10 kPa or more, still further more preferably 30 kPa or more, and yet still further more preferably 50 kPa or more.

When the high-frequency electric field is applied while performing the pressure application, the pressing pressure at the time of applying the high-frequency electric field, as an initial set value of the pressure applied to the high-frequency dielectric heating adhesive, is preferably 10 MPa or less, more preferably 5 MPa or less, still more preferably 1 MPa or less, and still further more preferably 750 kPa or less.

Here, the area serving as a reference for the initial set value of the pressure applied to the high-frequency dielectric heating adhesive is the smallest of the areas of the electrodes and the adherend in plan view.

### Modification of Embodiments

The invention is by no means limited to the above exemplary embodiments. The invention can encompass any modifications, improvements, and the like within the scope of the invention that the object of the invention is achievable.

The high-frequency dielectric heating treatment is not limited to being performed using the dielectric heating apparatus in which the electrodes described in the above embodiments are arranged opposite each other, and a grid electrode type high-frequency dielectric heating apparatus may also be used. The grid electrode type high-frequency dielectric heating apparatus includes grid electrodes in which electrodes of a first polarity and electrodes of a second polarity opposite to the first polarity are alternately arranged on the same plane at predetermined intervals. In the drawings, for the sake of simplicity, an embodiment using a dielectric heating apparatus in which electrodes are arranged opposite each other is illustrated.

### Examples

The invention will be described below in more detail with reference to Examples. The invention is by no means limited to these Examples.

### Preparation of High-Frequency Dielectric Heating Adhesive

### Examples 1 to 3 and Comparatives 1 to 3

As materials for preparing a high-frequency dielectric heating adhesive (adhesive sheet), a thermoplastic resin (A) and a dielectric filler (B) were each weighed so that the proportions described in Table 1 were obtained on a volume basis.

Next, the thermoplastic resin (A) and the dielectric filler (B) were premixed under predetermined conditions. The material obtained by premixing the thermoplastic resin (A) and the dielectric filler (B) was supplied to a hopper of a 30-mm diameter twin-screw extruder, and a cylinder and a die were heated to predetermined temperatures, whereby the premixed material was melt-kneaded. After the melt-kneaded material was cooled, the material was cut to prepare granular pellets. Next, the prepared granular pellets were charged into a hopper of a single-screw extruder equipped with a T-die, and a cylinder and a die were heated to predetermined temperatures. A film-shaped melt-kneaded material was extruded from the T-die and cooled by cooling rollers, thereby preparing sheet-shaped high-frequency dielectric heating adhesives (high-frequency dielectric heating adhesive sheets) having a thickness of 400 µm according to Examples 1 to 3 and Comparatives 1 to 3.

The thermoplastic resin (A) and the dielectric filler (B) shown in Table 1 are described as follows.

### Thermoplastic Resin (A)

(A1) r-PP: polypropylene resin (manufactured by Prime Polymer Co., Ltd., product name "Prime Polypro F-744NP", density: 0.90 g/cm³)

### Dielectric Filler (B)

(B1) ZnO: zinc oxide (manufactured by HAKUSUI TECH CO.,LTD., product name "DW-4")
(B2) ZnO: zinc oxide (manufactured by HAKUSUI TECH CO.,LTD., product name "Calcined Zinc Oxide")
(B3) to (B5) ZnO: zinc oxide (shape: irregular; zinc oxide obtained by granulation followed by crushing and adjusted to have a particle diameter Dn shown in Table 2)
(B6) ZnO: zinc oxide (manufactured by Sakai Chemical Industry Co., Ltd., product name "LPZINC11")

All of the zinc oxides of (B1) to (B6) are zinc oxides not subjected to surface modification.

### Evaluation of Physical Properties of High-Frequency Dielectric Heating Adhesive Nearest Centroid-to-Centroid Distance Dg / Particle Diameter Dn

The prepared high-frequency dielectric heating adhesive was cut along the thickness direction, and a cut surface of the cut adhesive sheet was polished using a cross-section ion polisher (manufactured by JEOL Ltd., product name "SM-09010") as a cross-section processing apparatus. Next, an SEM image was obtained at a magnification of 500× using an SEM (Crossbeam 550, manufactured by Carl Zeiss). The obtained SEM image was then subjected to binarization processing using Otsu's binarization method with the programming language Python, thereby obtaining a binarized image divided into two values of white and black. Further, the Blobs obtained during the binarization processing were detected as particles of the dielectric filler.

The equivalent circle diameters of 100 or more particles of the dielectric filler to be measured were determined, and the number average value based on the arithmetic mean of the measured equivalent circle diameters was calculated as the particle diameter Dn using the numpy mean function. Regarding the particles of the dielectric filler to be measured, the centroids of the particles were determined using the OpenCV moments function. Next, a Delaunay diagram connecting the determined centroids of the particles was created using the OpenCV Subdiv2D function, and the three edges of each triangle in the created Delaunay diagram were compared. Among the three compared edges of each triangle, the length of the shortest edge was measured as the nearest centroid-to-centroid distance. Then, an average value of 100 or more measured nearest centroid-to-centroid distances was defined as the nearest centroid-to-centroid distance Dg.

Next, based on the values of the particle diameter Dn and the nearest centroid-to-centroid distance Dg obtained as described above, the ratio of the nearest centroid-to-centroid distance Dg to the particle diameter Dn (Dg/Dn) was calculated.

In Table 2, the particle diameter Dn is denoted as Dn, the nearest centroid-to-centroid distance Dg is denoted as Dg, and the ratio of the nearest centroid-to-centroid distance Dg to the particle diameter Dn is denoted as Dg/Dn.

### Dielectric Property

The prepared high-frequency dielectric heating adhesive was cut into a size of 30 mm in length and 30 mm in width. Regarding the cut high-frequency dielectric heating adhesive sheet, a dielectric material test fixture 16453A (manufactured by Agilent Technologies) was attached to an RF impedance/material analyzer E4991A (manufactured by Agilent Technologies), and the relative permittivity (ε'r) and the dielectric loss tangent (tanδ) were measured by the parallel plate method under conditions of 23 degrees C and a frequency of 40.68 MHz. Based on the measurement results, a value of the dielectric property (tanδ/ε'r) was calculated.

### Rate of Temperature Increase

Two glass fiber-reinforced polypropylene resin plates (each having a length of 25 mm, a width of 100 mm, and a thickness of 1.5 mm) were prepared as adherends. The prepared high-frequency dielectric heating adhesive (adhesive sheet) was cut into a size of 25 mm in length and 12.5 mm in width. The cut adhesive sheet was placed between the two adherends to form a laminate.

The adherends and the adhesive sheet, which were laminated as described above, were fixed between two electrodes of a high-frequency dielectric heating apparatus (manufactured by Yamamoto Vinita Co., Ltd., product name "YRP-400TA"). Subsequently, while maintaining the fixed state, a high-frequency electric field was applied under the following high-frequency electric field application conditions to bond the adhesive sheet and the adherends. At this time, the sheet temperature was measured using a thermographic camera T860 (manufactured by FLIR Systems Japan K.K.), and the application time and the temperature of the adhesive sheet were plotted to calculate the rate of temperature increase during the initial 5 seconds of application time. The pressing pressure during application of the high-frequency electric field was an initial set value of the pressure applied to the adhesive sheet.

### High-Frequency Electric Field Application Conditions

Frequency: 40.68 MHz
Output: 100 W
Application time: up to 30 seconds
Pressing pressure: 0.5 MPa

### Volume Resistivity

The prepared high-frequency dielectric heating adhesive was cut into a size of 100 mm in length and 100 mm in width. The cut high-frequency dielectric heating adhesive sheet was left to stand for 24 hours under an environment of 23 degrees C and a relative humidity of 50% RH. Next, under the same environment, the resistivity at an applied voltage of 200 V was measured using a resistance meter (manufactured by ADC Corporation, "Digital Ultra-High Resistance/Micro Current Meter 5451").

**Table 1**

| | Adhesive sheet composition | | | | | |
|---|---|---|---|---|---|---|
| | Thermoplastic resin | | | Dielectric filler | | |
| | Reference signs | Composition | Blending ratio | Reference signs | Composition | Blending ratio |
| | - | - | vol% | - | - | vol% |
| Ex. 1 | A1 | r-PP | 80 | B1 | ZnO | 20 |
| Ex. 2 | A1 | r-PP | 80 | B2 | ZnO | 20 |
| Ex. 3 | A1 | r-PP | 80 | B3 | ZnO | 20 |
| Comp. 1 | A1 | r-PP | 80 | B4 | ZnO | 20 |
| Comp. 2 | A1 | r-PP | 80 | B5 | ZnO | 20 |
| Comp. 3 | A1 | r-PP | 70 | B6 | ZnO | 30 |

**Table 2**

| | Adhesive sheet properties | | | | | |
|---|---|---|---|---|---|---|
| | Dielectric filler | | | Dielectric property (tanδ/ε'r) | Volume resistivity | Rate of Temp. increase |
| | Dn | Dg | Dg/Dn | | | |
| | µm | µm | - | - | Ω·cm | °C/sec |
| Ex. 1 | 3.13 | 5.12 | 1.64 | 0.009 | 4.28×10¹⁶ | 7.71 |
| Ex. 2 | 2.40 | 3.75 | 1.57 | 0.010 | 4.50×10¹⁶ | 6.29 |
| Ex. 3 | 1.40 | 2.53 | 1.81 | 0.004 | 7.19×10¹⁶ | 6.29 |
| Comp. 1 | 1.91 | 3.62 | 1.89 | 0.005 | 8.07×10¹⁶ | 5.00 |
| Comp. 2 | 2.29 | 4.37 | 1.91 | 0.004 | 6.10×10¹⁶ | 4.29 |
| Comp. 3 | 5.46 | 6.90 | 1.26 | 0.019 | 1.05×10¹¹ | 13.2 |

The adhesive sheets of Examples 1 to 3 each exhibited a higher rate of temperature increase than those of Comparative 1 to 2. From these results, it is understood that the high-frequency dielectric heating adhesive according to the exemplary embodiment, which satisfies the above formula (F1), can bond adherends more firmly in a shorter time than the high-frequency dielectric heating adhesives of the Comparatives.

Further, the adhesive sheets of Examples 1 to 3 exhibited higher volume resistivity than that of Comparative 3. From these results, it is understood that the high-frequency dielectric heating adhesive according to the exemplary embodiment, which satisfies the above formula (F1), can suppress dielectric breakdown during dielectric heating treatment, as compared with the high-frequency dielectric heating adhesive of the Comparative.

From the above results, it was confirmed that, during dielectric heating treatment, the high-frequency dielectric heating adhesive according to the exemplary embodiment can bond more firmly to an adherend in a shorter time while suppressing dielectric breakdown, as compared with typical high-frequency dielectric heating adhesives.

### EXPLANATION OF CODES

10, 20...adhesive layer,
11...first surface,
21...second surface,
30...base material,
40...intermediate layer,
100...bonded body,
1A, 1B, 1C...high-frequency dielectric heating adhesive,
50...dielectric heating apparatus,
51...electrode (first high-frequency electric field applying electrode),
52...electrode (second high-frequency electric field applying electrode),
53...high-frequency power source,
110...adherend (first adherend), and
120...adherend (second adherend)

## Claims

1. A high-frequency dielectric heating adhesive, comprising:
a thermoplastic resin (A); and
a dielectric filler (B), wherein
when a cut surface obtained by cutting the high-frequency dielectric heating adhesive along a thickness direction is observed with a scanning electron microscope, a relationship of a nearest centroid-to-centroid distance Dg of the dielectric filler (B) to a particle diameter Dn of the dielectric filler (B) satisfies Formula (F1) below, $1.55 \leq Dg / Dn \leq 1.85$

2. The high-frequency dielectric heating adhesive according to claim 1, wherein the thermoplastic resin (A) is a polyolefin resin.

3. The high-frequency dielectric heating adhesive according to claim 1 or 2, wherein a content of the dielectric filler (B) is in a range from 3 vol% to 40 vol% based on a total amount of the high-frequency dielectric heating adhesive.

4. The high-frequency dielectric heating adhesive according to claim 1 or 2, wherein the dielectric filler (B) is at least one selected from the group consisting of zinc oxide, silicon carbide, and titanium oxide.

5. The high-frequency dielectric heating adhesive according to claim 1 or 2, wherein when a cut surface obtained by cutting the high-frequency dielectric heating adhesive along the thickness direction is observed with the scanning electron microscope, the particle diameter Dn of the dielectric filler (B) is in a range from 1.0 µm to 4.0 µm.

6. The high-frequency dielectric heating adhesive according to claim 1 or 2, wherein when a cut surface obtained by cutting the high-frequency dielectric heating adhesive along the thickness direction is observed with the scanning electron microscope, the nearest centroid-to-centroid distance Dg of the dielectric filler (B) is in a range from 2.2 µm to 6.0 µm.

7. The high-frequency dielectric heating adhesive according to claim 1 or 2, wherein the high-frequency dielectric heating adhesive is a high-frequency dielectric heating adhesive sheet.
